Europäisches Patentamt

European Patent Office

Office européen des brevets

(19)

(11) Publication number: **0 164 822**
**B1**

(12) **EUROPEAN PATENT SPECIFICATION**

(45) Date of publication of patent specification: **19.10.88**

(21) Application number: **85301783.8**

(22) Date of filing: **14.03.85**

(51) Int. Cl.⁴: **B 29 C 39/10, B 29 C 67/18,**
**B 29 C 67/24, B 44 F 9/12**

(54) **Method and apparatus to form grain coverings on articles of reactive plastics formulation.**

(30) Priority: **04.05.84 US 607063**

(43) Date of publication of application:
**18.12.85 Bulletin 85/51**

(45) Publication of the grant of the patent:
**19.10.88 Bulletin 88/42**

(84) Designated Contracting States:
**DE FR GB IT SE**

(56) References cited:
**EP-A-0 044 083**
**DE-A-2 656 965**
**FR-A-2 181 575**
**FR-A-2 237 783**
**FR-A-2 520 290**
**US-A-2 797 179**

(73) Proprietor: **EX-CELL-O CORPORATION**
**2855 Coolidge Highway**
**Troy Michigan 48084 (US)**

(72) Inventor: **Gaudreau, Laurent R.**
**324 Flynn's Lane**
**South Berwick Maine 03908 (US)**

(74) Representative: **Hartley, David et al**
**c/o Withers & Rogers 4 Dyer's Buildings Holborn**
**London, EC1N 2JT (GB)**

Courier Press, Leamington Spa, England.

# 0 164 822

**Description**

This invention pertains to a method and apparatus for forming integrally bonded skins or coverings on articles formed from reaction injection moulded plastics such as urethanes, DCDP, and polyesters, as described in the preamble of the independent claims 1 and 2. It has particular utility in the manufacture of decorative automobile trim components such as door panels, glove box doors, fuse box covers, pillar post covers and the like.

The automotive industry has turned to the use of padded-safety trim components comprising a polyvinyl chloride spaced from a metal or rigid plastic insert wherein the space between is filled with a urethane foam that is foamed in place to give a well-bonded integral structure. See, for example, the trim components disclosed in US—A—3123403. The acceptance of such components has been because inter alia this type of padded construction permits a wide latitude in styling and colour, and grain effects which are most desired particularly in the interior design of automobiles. To provide well matched colour and grain, it is desirable to use the same polyvinyl chloride skin materials in surrounding and adjacent parts where padding is not needed.

The current state of the art includes loading a performed grained vinyl shell in an ungrained mould of aluminium or epoxy construction and pouring reaction injection mould material or reinforced reaction injection mould material of reactive plastics formulation directly behind the shell to form an integral rigid substrate which is strongly bonded to the grained vinyl shell and which supports the shell thereby providing an unpadded article that matches the adjacent padded articles but at lower cost. The process can result in flattening of the grained face of vinyl shell due to pressure and exotherm heat developed during the reaction injection moulding action.

Other processes use a mould made from silicone or urethane materials with a hardness in the range of 60—90 shore A. These moulds are cast with preformed grained relief to create a grain in the outer surface of micro-cellular urethane mouldings. This type of mould is employed without vinyl shell or skin.

EP—A—0044083 discloses a method for producing an article comprising a substrate moulded from a reactive plastics formulation to which is bonded a vinyl shell having a grained surface, the method comprising the steps of providing a vinyl sheet with a grained surface, contacting the grained surface with a layer of soft material to protect the grain, said soft material having a hardness less than the hardness of the vinyl sheet and a thickness greater than the surface relief of the grained surface applying a reactive plastics formulation to the surface of the vinyl sheet opposite the grained surface, and causing the reactive plastics formulation to react and bond to the vinyl sheet.

In one aspect the invention provides a method characterised in that said vinyl sheet is a pre-formed vinyl shell which is formed prior to said contacting step, and said layer of soft material is a soft mould lining which is integral with or permanently bonded to a support surface of a mould cavity.

FR—A—2,181,575 discloses injection moulding apparatus for moulding a plastic part, said plastic part including a preformed grained surface vinyl shell and a layer of reaction injection moulded material, said moulding apparatus comprising two mould parts, one of which is arranged to receive the reaction injection moulded material and the other of which cooperates with the first-mentioned mould part to define a closed mould cavity, part of the mould cavity being defined by a rigidly supported soft mould lining which has a smooth surface.

In another aspect, the invention provides injection moulding apparatus characterised in that said soft mould lining is integral with or permanently bonded to said other mould part and is arranged to contact said grained surface and support said vinyl shell against pressure generated within said mould cavity during injection moulding whilst preventing flattening of the grain of the grained surface.

Further embodiments of the invention result from the features contained in the dependent claims.

In a preferred embodiment, the pour mould is formed with a thin, soft lining having a softness in the range of 25—80 durometer shore 00; a density in the range of 96 to 560 kg/m³ (6 to 35 PCF) and a thickness in the range of 0.254 to 2.54 mm (0.010 to 0.100 inches). The soft lining is formed as an integral part of, or bonded to the pour mould cavity and covers at least a portion of the cavity surface. A preformed, vinyl shell with a grained outer surface is loaded on the soft lining with tha grain relief engaging the soft lining. An advantage of the present invention is that the soft lining thickness may be of uniform cross-section and may be kept to a minimum thickness in order to allow only the grain depth to protrude into the lining to prevent grain flattening during the moulding process while providing a sufficiently defined mould support to prevent distortion of the overall shape and style lines of the part to be moulded.

Other advantages of the present invention will be readily appreciated from the following.

An embodiment of the invention will now be described by way of example with reference to the accompanying drawings in which:

Figure 1 is a cross-sectional view of a pour mould;

Figure 2 is a flow chart of one method of forming an article by the method of the present invention;

Figure 3 shows before and after surface grain relief patterns using prior art techniques; and

Figure 4 shows before and after surface grain relief patterns produced in accordance with the present invention.

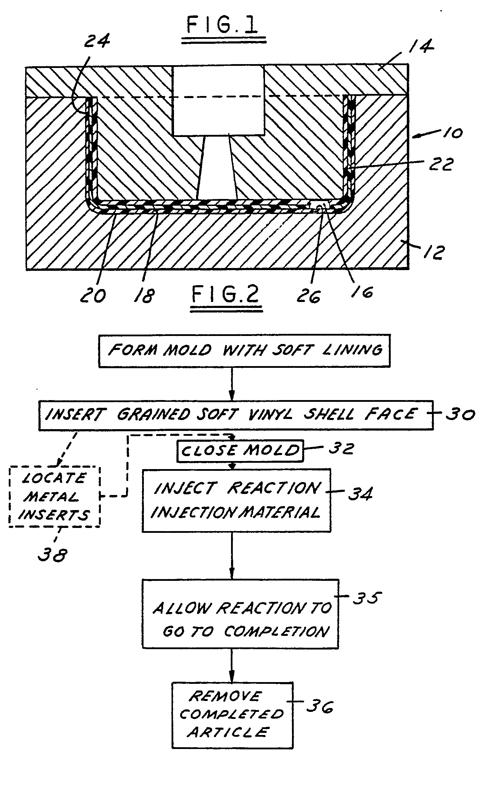

A mould assembly constructed in accordance with the present invention is generally shown at 10 in Figure 1. The assembly 10 includes at least one pour mould part 12 which in conjunction with mould cover

2

14 defines a mould cavity 16. At the start of the inventive method and mould cover 14 is opened and a vinyl shell 22 with a preformed grain surface 24 is loaded into the mould cavity 16 so that the grain surface 24 is supported by a smooth surface 26 of the soft lining 20. The vinyl sheel 22 is substantially complete as removed from its mould and includes a desired part shape and style lines for the design of the part to be formed by the mould process of the present invention. The pour mould part 12 and soft lining 20 are configured to support the vinyl shell 22 to maintain its preformed part shape and style lines. Further, the thickness of the soft lining 20 is minimized to assure such support and further is of a depth which will allow the grain ridges 52 (shown in Figure 4) to protrude into the soft lining 20.

In brief compass, this invention is a process of manufacturing an article of reaction injection moulded material which is intimately bonded to the vinyl shell 22. The process comprises coating a mould cavity part 14 with suitable release surface thereon; closing the mould with the vinyl shell 22 loaded in place on lining 20; injecting a reactive plastic formulation therein, allowing the reaction to go to completion while at the same time bonding the vinyl shell 22 to the reaction injection moulded material, and thereafter removing the completed article from the mould.

The outer shell 22 which is attached to the moulded substrate can be pigmented and grained so the article is substantially complete as removed from the mould. Also, as is customary, metal or plastic inserts or attaching members can be placed in the mould prior to the moulding step. The shell 22 that is placed within the mould usually will be a thermoplastic material, such as vinyl. Generally speaking, it will have a thickness in the order of 0.381 to 2.286 mm (0.015 to 0.090 inches).

Suitable soft linings 20 for use in the apparatus and method of the present invention are listed in the following tabulation. Other similar materials could be employed.

| | | | Thickness in mm (ins.) | Shore 00 durometer | Density (lbs/ft$^3$) (kg/m$^3$) |
|---|---|---|---|---|---|
| | 1. | Cohrlastic No. R-10480 Silicone sponge | 1.59 (1/16) | 40—64 | 560 (35) |
| | 2. | Rubatex No. R-411-N Neoprene sponge | 1.59 (1/16) | 25—45 | 160—256 (10—16) |
| | 3. | Rubatex No. R-431-N Neoprene sponge | 1.59 (1/16) | 60—80 | 288—448 (18—28) |
| | 4. | "Volara" expanded Polyethylene foam | 0.794 (1/31) & 1.59 (1/16) | 65 | 96(6) |

Cohlarstic is a trademark of CHR Industries Inc., and the No. R-10480 material is available at its offices at 407 East Street, New Haven, CN. 06509; Rubatex is a trademark of Rubatex Corp, and the R-411-N and R-431-N materials are available at its offices at P.O. Box 340, Bedford, VA 24523; Volara is a trademark of Voltek Inc., and the expanded polyethylene foam is available at its offices at 100 Shepard Street, Lawrence, MA. 01843.

The vinyl shell has a nominal shore A hardness of 75.

Suitable representative reaction injection moulded polyurethane compositions and processes are set forth in USPN 4,426,348 issued January 17, 1984 for Polyurethane RIM system. Typically, the pressure exerted in the mould cavity is in the range of 345 to 517 kPa (50—75 psi).

Figure 2 illustrates the above sequence of steps at the mould apparatus 10. The preformed grained vinyl shell 22 is loaded at 30 with its grained surface in engagement with soft lining 20. The mould is closed at 32 and the reactive plastic formulation is injected at 34. Following a desired reaction peroid at 35, the finished article is removed at 36. The reference numeral 38 indicates an additional step that may occur in the practice of the invention.

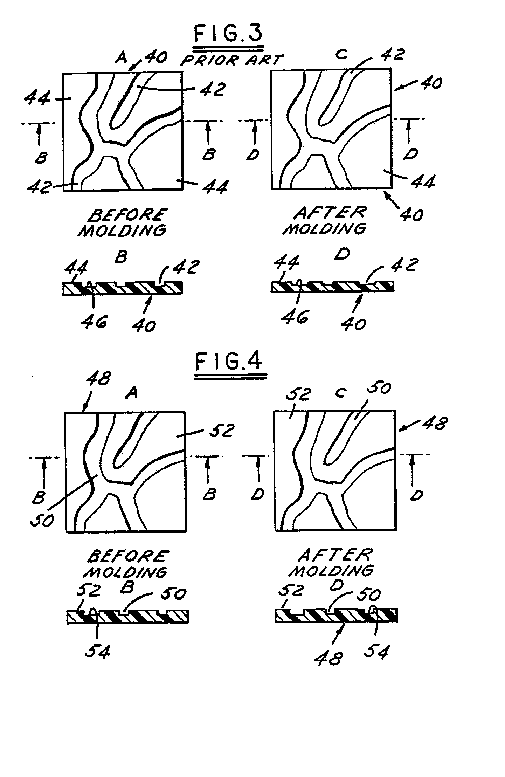

In Figure 3 a segment 40 of a preformed vinyl shell is illustrated with grain relief grooves 42 defined by ridges 44 and valleys 46. As previously discussed, such grain relief in prior art processes is loaded with the grain relief grooves in contact with a smooth metal or hard plastic mould surface. The resultant reaction injection moulding pressure and heat tend to flatten the grain pattern or an almost smooth surface.

Figure 4 shows a preformed vinyl shell segment 48 with grain relief grooves 50 defined by ridges 52 and valleys 54. The ridges 52 protrude into the thickness of the soft lining 20 during the reaction injection mould process.

The relative hardness of the lining 20 and the vinyl shell cooperate to form an equilibrium condition to hold the ridges 52 from the smooth hard surface 18 of the pour mould part 12 so that the grained surface retains its original grain relief shape so as to meet desired style features on the outer surface of the finished part.

The soft mould lining 20 may be formed by pouring, casting or injecting the mould lining material into the pour mould cavity.

**Claims**

1. A method for producing an article comprising a substrate moulded from a reactive plastics formulation to which is bonded a vinyl sheet (22) have a grained surface (24), the method comprising the steps of providing a vinyl sheet with a grained surface, contacting the grained surface with a layer of soft material (20), to protect the grain, said soft material having a hardness less than the hardness of the vinyl sheet and a thickness greater than the surface relief of the grained surface applying a reactive plastics formulation to the surface of the vinyl sheet opposite the grained surface, and causing the reactive plastics formulation to react and bond to the vinyl sheet, characterised in that said vinyl sheet (22), is a pre-formed vinyl shell (22) which is formed prior to said contacting step and said layer of soft material (20) is a soft mould lining (20) which is integral with or permanently bonded to a support surface (26) of a mould cavity (16).

2. A method as claimed in claim 1 wherein said mould cavity (16) is closed, said reactive plastics formulation is injected into the closed mould cavity and said soft mould lining (20) supports said vinyl shell (22) against pressure generated within the mould cavity so as substantially to prevent deformation of the vinyl shell.

3. A method according to claim 1 or claim 2 wherein the soft mould lining (20) is preformed from a material having durometer in the range of 15 to 95 shore 00 hardness and a density in the range of 96 to 560 kg/m$^3$ (6 to 35 PCF).

4. A method according to any preceding claim wherein the vinyl shell (22) has a durometer in the range of 25 to 95 shore A hardness.

5. A method according to claim 4 wherein the vinyl shell (22) has a durometer in the range 50 to 95 shore A hardness.

6. A method according to any one of claims 1 to 5, wherein the soft mould lining (20) has a durometer in the range 25 to 80 shore 00 hardness.

7. Injection moulding apparatus for moulding a plastic part, said plastic part including a pre-formed grained surface vinyl shell (22) and a layer of reaction injection moulded material, said moulding apparatus (Figure 1) comprising two mould parts (12, 14) one of which (14) is arranged to receive the reaction injection moulded material and the other of which (12) cooperates with the first-mentioned mould part to define a closed mould cavity (16), part of the mould cavity being defined by a rigidly supported soft mould lining (20) which has a smooth surface (26) characterised in that said soft mould lining is integral with or permanently bonded to said other mould part (12) and is arranged to contact said grained surface (24) and support said vinyl shell (22) against pressure generated within said mould cavity (16) during injection moulding whilst preventing flattening of the grain of grained surface.

8. Apparatus according to claim 7 wherein the soft mould lining (20) has a durometer in the range of 15 to 95 shore 00 hardness and a density in the range of 95 to 560 kg/m$^3$ (6 to 35 PCF).

9. Apparatus according to claim 8 wherein the soft mould lining (20) has a durometer in the range of 25 to 80 shore 00 hardness.

**Patentansprüche**

1. Verfahren zur Herstellung eines Erzeugnisses, das ein aus einer reaktionsfähigen Kunstofformulierung geformtes Substrat umfaßt, mit dem eine Vinylbahn (22) mit einer genarbten Oberfläche (24) verbunden ist, wobei das Verfahren folgende Schritte umfaßt:
Bereitstellung einer Vinylbahn mit einer genarbten Oberfläche, Kontaktierung der genarbten Oberfläche mit einer Schicht aus einem weichen Material (20), um die Narbung zu schützen, wobei das weiche Material eine Härte, die geringer ist als die Härte der Vinylbahn, und eine Dicke aufweist, die größer ist also das Oberflächenrelief der genarbten Oberfläche, Aufbringen einer reaktionsfähigen Kunststofformulierung auf die der genarbten Oberfläche gegenüberliegenden Oberfläche der Vinylbahn, Umsetzen der reaktionsfähigen Kunststofformulierung und Verbinden mit der Vinylbahn, dadurch gekennzeichnet, daß die Vinylbahn (22) ein vorgeformter Vinylmantel (22) ist, der vor der Stufe der Kontaktierung geformt wird, und die Schicht des weichen Materials (20) eine weiche Formauskleidung (20) ist, die in einem Stück mit oder dauerhaft mit einer Trageroberfläche (26) eines Formhohlraums (16) verbunden ist.

2. Verfahren nach Anspruch 1, bei welchem der Formhohlraum (16) geschlossen ist, die reaktionsfähige Kunststofformulierung in den geschlossenen Formhohlraum gespritzt wird und die weiche Formauskleidung (20) den Vinylmaterial (22) gegen den innerhalb des Formhohlraums erzeugten Druck abstützt, um eine Verformung des Vinylmantels weitgehend zu vermeiden.

3. Verfahren nach Anspruch 1 oder 2, dadurch gekennzeichnet, daß die weiche Formauskleidung (20) aus einem Material vorgeformt ist, das eine Durometer-Shore-00-Härte im Bereich von 15 bis 95 und eine Dichte im Bereich von 96 bis 560 kg/m$^3$ (6 bis 35 PCF) aufweist.

4. Verfharen nach einem der vorhergehenden Ansprüche, bei welchem der Vinylmantel (22) eine Durometer-Shore-A-Härte im Bereich von 25 bis 95 aufweist.

5. Verfahren nach Anspruch 4, bei welchem der Vinylmantel (22) eine Durometer-Shore-A-Härte im Bereich von 50 bis 95 aufweist.

**0 164 822**

6. Verfahren nach einem der Ansprüche 1 bis 5, bei welchem die weiche Formauskleidung (20) eine Durometer-Shore-00-Härte im Bereich von 25 bis 80 aufweist.

7. Spritzformvorrichtung zur Formung eines Kunststoffteils, das einen vorgeformten Vinylmantel (22) mit einer genarbten Oberfläkhe und eine Schicht eines durch Reaktionsspritzguß geformten Stoffes umfaßt, wobei die Formvorrichtung (Fig. 1) zwei forgebende Teile (12, 14) umfaßt, von denen eines (14) so angeordnet ist, daß es den durch Reaktionsspritzguß hergestellten Stoff aufnimmit und von denen das andere (12) mit dem zuerst erwähnten formgebenden Teil zusammenwirkt, wodurch sich ein geschlossener Formhohlraum (16) ergibt, wobei ein Teil des Formhohlraums durch eine eine glatte Oberfläche (26) aufweisende starr abgestützte weiche Formauskleidung (20) gebildet wird, dadurch gekennzeichnet, daß die weiche Formauskleidung in einem Stück mit oder dauerhaft mit dem anderen formgebenden Teil (12) verbunden ist und so angeordnet ist, daß sie im Kontakt steht mit der genarbten Oberfläche (24) und den Vinylmantel (22) gegen den Druck abstützt, der im Formhohlraum (16) während des Spritzgusses erzeugt wird, wobei die Abflachung der Narbung der genarbten Oberfläche verhindert wird.

8. Vorrichtung nach Anspruch 7, bei welchem die weiche Formauskleidung (20) eine Durometer-Shore-00-Härte im Bereich von 15 bis 95 und eine Dichte im Bereich von 95 bis 560 kg/m$^3$ (6 bis 35 PCF) aufweist.

9. Vorrichtung nach Anspruch 8, bei welchem die weiche Formauskleidung (20) eine Durometer-Shore-00-Härte im Bereich von 25 bis 80 aufweist.

## Revendications

1. Méthode pour produire un article, comprenant un substrat moulé à partir d'une formulation réactive de matières plastiques, sur lequel est fixée une feuillede vinyle (22) ayant une surface grenue (24), le procédé comprenant des étapes d'alimentation d'une feuille de vinyle avec une surface grenue, de mise en contact de la surface grenue avec une couche de matériau souple (20), pour protéger le grain, ledit matériau souple ayant une dureté inférieure à la dureté de la feuille de vinyle et une épaisseur plus grande que l'épaisseur du relief de la surface grenue, d'application d'une formulation réactive de matières plastiques sur la surface de la feuille de vinyle opposée à la surface grenue, et le déclenchement de la réaction de la matière plastique pour lier le plastique à la feuille de vinyle, caractérisée en ce que ladite feuille de vinyle (22) est une coquille préformée de vinyle (22), formée avant l'étape de contact, et en ce que ladite couche de matériau souple (20) est un revêtement souple de moulage (20) qui fait partie ou qui est lié d'une manière permanente à la surface de support (26) de la cavité de moulage (16).

2. Procédé selon la revendication 1, dans lequel ladite cavité de moulage est fermée, la formulation réactive de matières plastiques étant injectée dans la cavité de moule fermée, et ledit revêtement souple de moulage (20) supportant ladite coquille de vinyle (22) contre la pression générée à l'intérieur de la cavité de moule, de manière à prévenir la déformation de la coquille de vinyle.

3. Procédé selon la revendication 1 ou 2, dans lequel le revêtement souple de moulage (20) est préformé à partir d'un matériau ayant une dureté de 15 à 95 Shore 00, et une densité de 96 à 560 kg/m$^3$.

4. Procédé selon l'une quelconque des revendications précédentes, caractérisé en ce que la coquille de vinyle (22) a une dureté Shore A de 25 à 95.

5. Procédé selon la revendication 4, dans lequel la coquille de vinyle (22) a une dureté Shore A de 50 à 95.

6. Procédé selon l'une quelconque des revendications 1 à 5, dans lequel le revêtement souple de moulage (20) a une dureté Shore 00 de 25 à 80.

7. Appareil de moulage par injection pour mouler un composant en plastique, ledit composant en plastique incluant une coquille (22) de vinyle grenu préformé, et une couche de matériau moulé par injection réactive, ledit appareil (figure 1) comprenant deux parties de moule (12, 14) dont l'une (14) est arrangée pour recevoir le matériau moulé par injection réactive, et l'autre (12) coopère avec la première partie pour définir une cavité (16) fermée de moulage, la partie de la cavité étant définie par un revêtement souple (20) de moulage supporté rigidement, cette partie souple ayant une surface lisse (26), caractérisé en ce que ledit revêtement souple de moulage forme partie intégrante ou est lié en permanence à ladite partie (12) et est arrangé pour être en contact avec ladite surface grenue (24) et supporter ladite coquille de vinyle (22) contre la pression générée à l'intérieur de la cavité de moulage (16) durant l'injection, de manière à prévenir l'aplatissement du grain de la surface grenue.

8. Appareil selon la revendication 7, caractérisé en ce que le revêtement souple de moulage (20) présente une dureté Shore 00 de 15 à 95 et une densité de 95 à 560 kg/m$^3$.

9. Appareil selon la revendication 8, caractérisé en ce que le revêtement souple de moulage (20) présente une dureté Shore 00 de 25 à 80.

## F I G. 1

24  14  10  22  12  20  18  26  16

## F I G. 2

FORM MOLD WITH SOFT LINING

INSERT GRAINED SOFT VINYL SHELL FACE — 30

CLOSE MOLD — 32

LOCATE METAL INSERTS
38

INJECT REACTION INJECTION MATERIAL — 34

ALLOW REACTION TO GO TO COMPLETION — 35

REMOVE COMPLETED ARTICLE — 36

1

0 164 822

## FIG.3
PRIOR ART

BEFORE
MOLDING

AFTER
MOLDING

## FIG.4

BEFORE
MOLDING

AFTER
MOLDING

2